**Europäisches Patentamt**

**European Patent Office**

**Office européen des brevets**

(19)

(11) Numéro de publication: **0 296 295**

**A1**

(12) # DEMANDE DE BREVET EUROPEEN

(21) Numéro de dépôt: **87401478.0**

(22) Date de dépôt: **26.06.87**

(51) Int. Cl.4: **G01P 3/489**

Revendications modifiées conformément à la règle 86 (2) CBE.

(43) Date de publication de la demande:
**28.12.88 Bulletin 88/52**

(84) Etats contractants désignés:
**AT BE CH DE ES GB GR IT LI LU NL SE**

(71) Demandeur: **COFRETH Société Anonyme:**
**46 rue Letort**
**F-75018 Paris(FR)**

(72) Inventeur: **Chatre, Michel**
**141 rue Legendre**
**F-75017 Paris(FR)**

(74) Mandataire: **Lefebure, Gérard et al**
**Office Blétry 2, boulevard de Strasbourg**
**F-75010 Paris(FR)**

(54) **Dispositif numérique de mesure de la vitesse d'un alternateur en particulier pour le démarrage et le contrôle d'un groupe électrogène de secours.**

(57) Ce dispositif numérique de mesure de vitesse comprend au moins un circuit d'adaptation d'impédance et de mise en forme (I), qui est connecté à au moins une phase d'un alternateur et qui produit un signal rectangulaire périodique ayant une fréquence correspondant à celle de la tension de l'alternateur, au moins un circuit de comptage et de mémorisation (2), qui reçoit ledit signal rectangulaire périodique et qui, à chaque période de celui-ci, produit et stocke une valeur numérique qui est directement proportionnelle à la période de la tension de l'alternateur, et un circuit de calcul numérique (3), qui est connecté à la sortie du circuit de comptage et de mémorisation (2) et qui calcule la fréquence de la tension de l'alternateur et la vitesse de celui-ci à partir de la valeur numérique mémorisée.

FIG.1

EP 0 296 295 A1

## Dispositif numérique de mesure de la vitesse d'un alternateur, en particulier pour le démarrage et le contrôle d'un groupe électrogène de secours.

La présente invention concerne un dispositif numérique de mesure de la vitesse d'un alternateur, en particulier, mais non exclusivement pour le démarrage et le contrôle d'un groupe électrogène de secours.

Actuellement, le démarrage et le contrôle des groupes électrogènes pouvant être branchés en secours sur le secteur, lorsque la tension de celui-ci descend au-dessous d'un seuil prédéterminé de tension minimale, sont le plus souvent assurés par des automatismes de type électromécanique ou logique câblée. Pour détecter les divers seuils de vitesse et de tension du groupe électrogène (seuil de vitesse d'arrêt du démarreur du moteur d'entraînement de l'alternateur, seuil de vitesse nominale, seuil de survitesse, etc.), ces technologies utilisent des détecteurs électromécaniques de seuil de vitesse soit par contact centrifuge, soit par dynamo tachymétrique, soit encore par compte-tours, et des détecteurs électromécaniques de seuil de tension, qui manquent de précision et de fiabilité. En outre, divers instruments de mesure, tels que volmètre, fréquence-mètre, compte-tours..., doivent être habituellement prévus pour permettre un contrôle visuel des paramètres de fonctionnement du groupe électrogène. En outre, les installations connues de ce type souffrent d'un manque d'information sur la nature et la chronologie des changements d'état du groupe électrogène.

La présente invention a donc principalement pour but de permettre la détermination de tous les seuils de vitesse d'un alternateur à partir des seules phases de celui-ci, en particulier, mais non exclusivement, pour le démarrage et le contrôle d'un groupe électrogène.

A cet effet, la présente invention fournit un dispositif numérique de mesure de la vitesse d'un alternateur, caractérisé en ce qu'il comprend au moins un circuit d'adaptation d'impédance et de mise en forme, qui est connecté à au moins une phase de l'alternateur et qui produit un signal rectangulaire périodique ayant une fréquence correspondant à celle de la tension de l'alternateur, au moins un circuit de comptage et de mémorisation, qui reçoit ledit signal rectangulaire périodique et qui, à chaque période de celui-ci, produit et stocke une valeur numérique qui est directement proportionnelle à la période de la tension de l'alternateur, et un circuit de calcul numérique, qui est connecté à la sortie du circuit de comptage et de mémorisation et qui calcule la fréquence de la tension de l'alternateur et la vitesse de celui-ci à partir de la valeur numérique mémorisée.

Ainsi, tous les seuils de vitesse de l'alternateur devant entraîner un changement d'état des dispositifs de commande associés au groupe électrogène (seuil de vitesse d'arrêt du démarreur associé au moteur à combustion interne du groupe électrogène, seuil de survitesse de l'alternateur, seuil de vitesse nominale de l'alternateur), peuvent être déterminés par comparaison de la valeur de la vitesse calculée par ledit circuit de calcul numérique à des signaux de référence correspondant à des seuils prédéterminés de vitesse. De même, les seuils de tension devant entraînés un changement d'état des dispositifs de commande associés au groupe électrogène peuvent être déterminés en mesurant les tensions entre les phases de l'alternateur et entre les phases du secteur et en comparant les tensions ainsi mesurées à des seuils prédéterminés de tension. Le calcul de la fréquence de la tension de l'alternateur, le calcul de la vitesse de celui-ci et les comparaisons aux divers seuils prédéterminés peuvent être avantageusement effectués au moyen d'un microprocesseur convenablement programmé. Dans ce cas, le microprocesseur peut être également programmé pour stocker en mémoire les valeurs des divers paramètres mesurés ou calculés (fréquence, vitesse, tensions), la nature et la chronologie des changements d'état de l'installation (chute de la tension du secteur au-dessous du seuil prédéterminé de tension minimale, mise en route du groupe électrogène, arrêt dudit groupe, défauts de fonctionnement du groupe électrogène, ...), et pour commander l'affichage et/ou l'impression des valeurs des paramètres susmentionnés et de la nature et de la chronologie desdits changements d'état.

D'autres caractéristiques et avantages de la présente invention apparaîtront mieux au cours de la description qui va suivre d'une forme d'exécution de la présente invention, donnée en référence aux dessins annexés sur lesquels :

La figure I est un schéma par blocs montrant le dispositif numérique de mesure de vitesse de l'invention.

Les figures 2a et 2b montrent des formes d'onde de signaux apparaissant en divers points du dispositif numérique de mesure de la figure I, respectivement au démarrage de l'alternateur et à la vitesse nominale de celui-ci.

La figure 3 est un schéma par blocs d'un dispositif de démarrage et de contrôle d'un groupe électrogène utilisant le dispositif numérique de mesure de vitesse de la figure I.

Le dispositif numérique de mesure de vitesse 10 représenté sur la figure I est plus particulièrement destiné à un alternateur triphasé. Il comprend essentiellement trois circuits d'adaptation d'impédance et de mise en forme I, à chacun desquels est associé un circuit de comptage et de mémorisation 2, et un circuit de calcul numérique 3 relié aux trois circuits de comptage et de mémorisation 2.

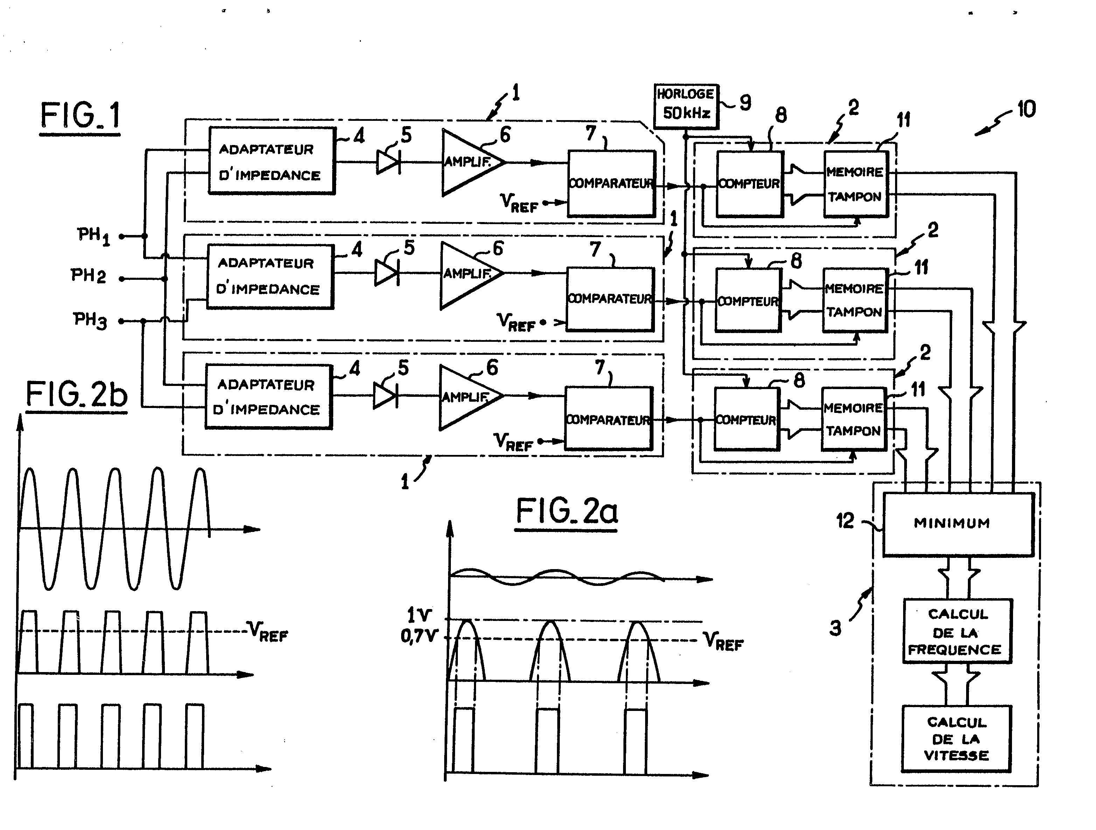

Chacun des trois circuits d'adaptation d'impédance et de mise en forme 1 comprend un adaptateur d'impédance 4, par exemple un transformateur dont l'enroulement primaire est connecté entre deux des trois phases $PH_1$, $PH_2$ et $PH_3$ de l'alternateur, un redresseur mono-alternance 5 connecté au secondaire du transformateur 4, un amplificateur 6 connecté à la sortie du redresseur 5 et un comparateur 7, dont l'une des entrées est connectée à la sortie de l'amplificateur 6 et dont l'autre entrée reçoit une tension de référence $V_{REF}$. Pour un alternateur ayant une tension nominale de 380 volts entre phases, le rapport de transformation du transformateur 4 et le gain de l'amplificateur 6 sont choisis de telle manière que la valeur crête de la tension obtenu à la sortie de l'amplificateur 6 varie par exemple d'environ I volt à environ 25 volts en fonction de la tension d'entrée (dans cet exemple, la tension entre deux phases de l'alternateur varie d'environ 5 à 10 volts au démarrage à 380 volts lorsque l'alter nateur atteint sa vitesse nominale). Dans ce cas, la tension de référence $V_{REF}$ est choisie de manière à avoir une valeur légèrement plus faible que la valeur crête de la tension obtenue à la sortie de l'amplificateur 6 au démarrage de l'alternateur, par exemple 0,6 ou 0,7 volt comme montré dans la figure 2a. De cette manière, quelle que soit la vitesse de l'alternateur, on obtient à la sortie de chacun des comparateurs 7 un signal rectangulaire périodique, dont la fréquence est égale à celle de la tension de l'alternateur, comme montré dans les figures 2a et 2b.

Chacun des trois circuits de comptage et de mémorisation 2 comprend un compteur 8, dont l'entrée de comptage est connectée à la sortie d'une horloge 9 à haute fréquence, et dont l'entrée de remise à zéro est connectée à la sortie du comparateur 7 du circuit 1 correspondant. La sortie de chaque compteur 8 est connectée à l'entrée des données d'une mémoire tampon 11, dont l'entrée de commande d'écriture est connectée à la sortie du comparateur 7 du circuit I correspondant. Ainsi, à chaque période du signal rectangulaire périodique produit par l'un quelconque des trois comparateurs 7, le compteur 8 correspondant totalise les impulsions délivrées par l'horloge 9. Le front montant des créneaux produits par le comparateur 7 provoque la mémorisation de la valeur de comptage dans la mémoire tampon correspondante 11, puis la remise à zéro du compteur 8. La valeur numérique ainsi mémorisée dans chacune des trois mémoires tampons 11 est directement proportionnelle à la période de la tension de l'alternateur.

Par mesure de sécurité, la période de la tension de l'alternateur est déterminée pour chacune des trois phases de l'alternateur comme montré dans le schéma de la figure I. On choisit alors parmi les trois valeurs de la période mémorisées dans les mémoires tampons 11 celle qui a la plus petite valeur. Ceci peut être effectué par des moyens de sélection de valeur minimale 12, qui sont connectés aux trois mémoires tampons 11 et qui font partie du circuit de calcul numérique 3. Sur la base de la valeur minimale sélectionnée par les moyens 12, le circuit de calcul numérique 3 calcule ensuite la fréquence F de la tension de l'alternateur par la formule :

$$F = \frac{1}{T}$$

où T représente ladite valeur minimale sélectionnée de la période, puis il calcule la vitesse V de l'alternateur par la formule :

$$V = \frac{F}{50} \cdot V_{nom}$$

pour un alternateur ayant une fréquence nominale de 50 Hz et une vitesse nominale $V_{nom}$. La précision du comptage effectué par chacun des compteurs 8 et, par suite, la précision des valeurs calculées de la fréquence et de la vitesse correspond à une période d'horloge, soit 20 $\mu$s dans le cas où l'horloge 9 a une fréquence de 50 kHz, ce qui donne une précision de ± 0,05 Hz à 50 Hz pour la fréquence, et une précision de ± 1,5 tr/mn à 1500 tr/mn pour la vitesse.

Dans la pratique, le circuit de calcul numérique 3 peut être par exemple constitué par un microprocesseur convenablement programmé.

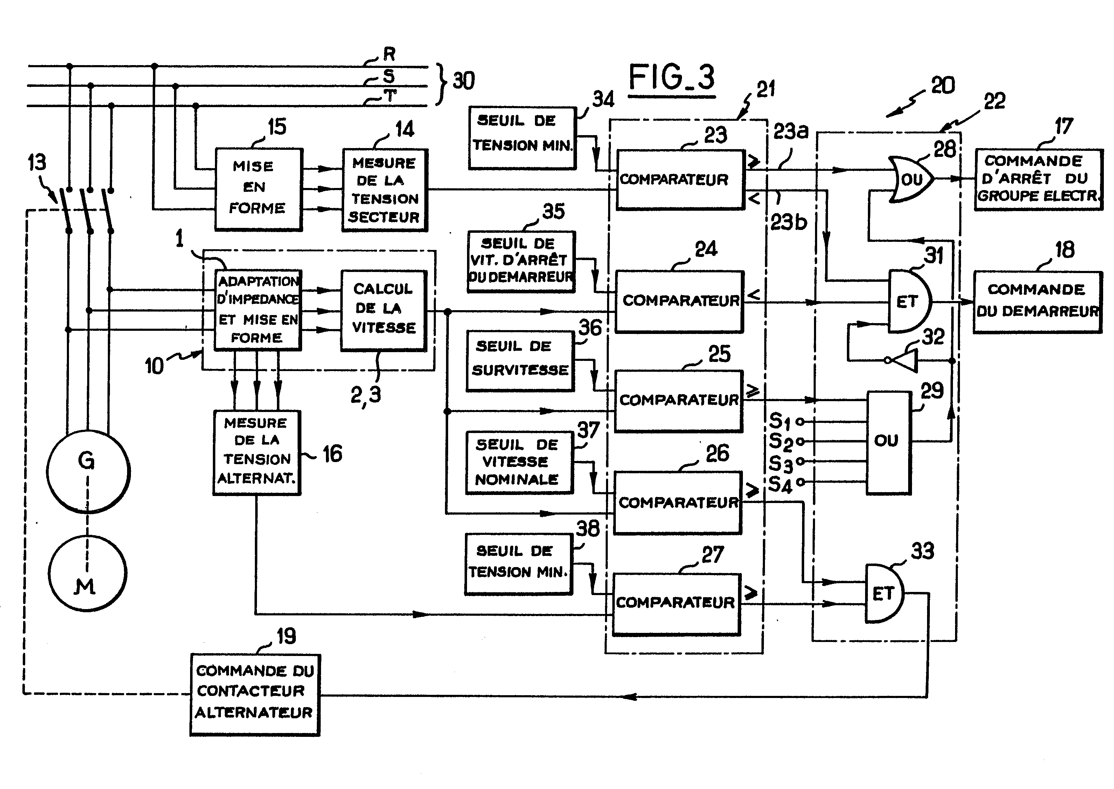

La figure 3 montre le dispositif numérique de mesure de vitesse 10 combiné à un dispositif de démarrage et de contrôle 20 d'un groupe électrogène de secours. Sur la figure 3, on a également représenté l'alternateur G du groupe électrogène et son moteur d'entraînement M à combustion interne, par exemple un moteur Diesel. Les trois phases de l'alternateur G peuvent être connectées respectivement aux trois phases R,S et T du secteur 30 au moyen d'un contacteur 13 qui est normalement ouvert lorsque la tension du secteur est supérieure à un seuil prédéterminé de tension minimale.

Le dispositif de démarrage et de contrôle 20 comprend un circuit de mesure de tension 14 dont l'entrée est connectée aux trois phases R,S et T du secteur 30 par l'intermédiaire d'un circuit de mise en forme 15. Le circuit de mesure de tension 14 peut être par exemple constitué par un convertisseur analogique-numérique et par des moyens sélectionnant parmi les trois tensions mesurées celle qui a la plus petite valeur.

Le dispositif de démarrage et de contrôle 20 comprend en outre un autre circuit de mesure de tension 16 qui est relié aux trois phases de l'alternateur G à travers le circuit d'adaptation d'impédance et de mise en forme 1 du dispositif numérique de mesure de vitesse 10, le circuit de mesure de tension 16 étant par exemple connecté à la sortie des adaptateurs d'impédance 4 ou à la sortie des amplificateurs 6 de la figure 1. Le circuit de mesure de tension 16 peut avoir une constitution semblable à celle du circuit de mesure de tension 14.

Le dispositif de démarrage et de contrôle 20 comprend en outre un circuit de commande 17 pour commander l'arrêt du groupe électrogène, un circuit de commande 18 pour commander le démarreur électrique du moteur M, un circuit de commande 19 pour commander le contacteur 13, des moyens comparateurs 21 connectés au dispositif numérique de mesure de vitesse 10 et aux premier et second circuits de mesure de tension 14 et 16 pour comparer le signal de sortie du dispositif numérique de mesure 10 à plusieurs seuils prédéterminés de vitesse et les signaux de sortie des premier et second circuits de mesure de tension 14 et 16 à des seuils prédéterminés de tension, et un circuit logique de décision 22, dont l'entrée est connectée aux moyens comparateurs 21 et la sortie aux trois circuits de commande 17, 18 et 19, pour activer sélectivement lesdits circuits de commande en réponse aux résultats des comparaisons effectuées par les moyens comparateurs.

Les moyens comparateurs 21 comprennent un premier comparateur 23, dont l'une des entrées est connectée à la sortie du circuit de mesure de tension 14 et dont l'autre entrée reçoit un premier signal de référence correspondant au seuil prédéterminé de tension minimale au-dessous duquel la tension du secteur 30 est considérée comme insuffisante pour assurer le bon fonctionnement d'une charge (non montrée) connectée au secteur, et au-dessous duquel l'alternateur G doit être branché sur le secteur pour assurer l'alimentation correcte de ladite charge. Le comparateur 23 est agencé pour fournir un signal logique "1" sur une première sortie 23a et un signal logique "0" sur une seconde sortie 23b lorsque le signal de sortie du circuit de mesure de tension 14 a une valeur supérieure ou égale à celle du premier signal de référence, et inversement un signal logique "0" sur la sortie 23a et un signal logique "1" sur la sortie 23b lorsque le signal de sortie du circuit 14 a une valeur inférieure à celle du premier signal de référence. Les moyens comparateurs 21 comprennent en outre trois autres comparateurs 24, 25 et 26, dont l'une des entrées est connectée à la sortie du dispositif numérique de mesure de vitesse 10. Le comparateur 24 reçoit sur son autre entrée un second signal de référence correspondant à un seuil prédéterminé de vitesse d'arrêt du démarreur du moteur M, et il produit sur sa sortie un signal logique "1" lorsque le signal de sortie du dispositif numérique de mesure de vitesse 10 a une valeur inférieure à celle du second signal de référence, et un signal logique "0" dans le cas contraire. Le comparateur 25 reçoit sur son autre entrée un troisième signal de référence correspondant à un seuil de survitesse de l'alternateur G, et il produit sur sa sortie un signal logique "1" lorsque le signal de sortie du dispositif numérique de mesure de vitesse 10 a une valeur supérieure ou égale à celle du troisième signal de référence, et un signal logique "0" dans le cas contraire. Le comparateur 26 reçoit sur son autre entrée un quatrième signal de référence correspondant à un seuil de vitesse nominale de l'alternateur G, et il produit sur sa sortie un signal logique "1" lorsque le signal de sortie du dispositif numérique de mesure de vitesse 10 a une valeur supérieure ou égale à celle du quatrième signal de référence, et un signal logique "0" dans le cas contraire. Les moyens comparateurs 21 comprennent en outre un cinquième comparateur 27 dont l'une des entrées est connectée à la sortie du circuit de mesure de tension 16 et dont l'autre entrée reçoit un cinquième signal de référence correspondant à un seuil de tension minimale au-dessus duquel l'alternateur G peut être branché sur le secteur 30 par le contacteur 13. La valeur du cinquième signal de référence peut être égale à celle du premier signal de référence appliqué au comparateur 23. Le comparateur 27 produit sur sa sortie un signal logique "1" lorsque la valeur du signal de sortie du circuit de mesure de tension 16 est supérieure ou égale à la valeur du cinquième signal de référence, et un signal logique "0" dans le cas contraire.

Le circuit logique de décision 22 comprend une première porte OU 28 dont l'une des entrées est connectée à la sortie 23a du comparateur 23 et dont l'autre entrée est connectée à la sortie d'une seconde porte OU 29 à plusieurs entrées. Une première entrée de la porte OU 29 est connectée à la sortie du comparateur 25. La porte OU 29 reçoit sur ses autres entrées des signaux de défaut $S_1$, $S_2$, $S_3$, $S_4$, qui sont respectivement au niveau logique "1" lorsque des capteurs associés au moteur M détectent un défaut de fonctionnement du moteur M. Lesdits capteurs peuvent par exemple comprendre un capteur de température d'eau, un capteur de pression d'eau, un capteur de température d'huile et un capteur de pression d'huile. Le circuit logique de décision 22 comprend en outre une première porte ET 31 à trois entrées, dont une première entrée est connectée à la sortie 23b du comparateur 23, une seconde entrée à la sortie du comparateur 24 et une troisième entrée à la sortie de la porte OU 29 à travers un inverseur logique 32. Le circuit logique de décision 22 comprend en outre une deuxième porte ET 33 dont les entrées sont respectivement connectées aux sorties des comparateurs 26 et 27 et dont la sortie est connectée à l'entrée du circuit du commande 19.

Bien que les moyens comparateurs 21 et le circuit logique de décision 22 représentés dans la figure 3 soient constitués respectivement par des comparateurs et par des portes logiques, les tâches assignées aux moyens comparateurs 21 et au circuit logique de décision 22 peuvent être exécutées par un microprocesseur convenablement programmé, qui peut être le même que celui qui calcule la fréquence et la vitesse dans le dispositif numérique de mesure de vitesse 10. Les signaux de référence respectivement appliqués aux comparateurs 23 à 27 peuvent être des signaux numériques qui sont par exemple pré-enregistrés dans la mémoire du microprocesseur ou fournis par des codeurs respectifs 34 à 38.

On décrira maintenant le fonctionnement du dispositif de démarrage et de contrôle 20 de la figure 3. Tant que la tension entre deux phases quelconques du secteur 30 reste supérieure au seuil prédéterminé de tension minimale, le groupe électrogène ne fonctionne pas. En conséquence, la sortie du comparateur 24 est au niveau logique "I" et les sorties des comparateurs 25 à 27 sont au niveau logique "0". La porte ET 33 est donc invalidée, le circuit de commande 19 est désactivé et le contacteur 30 est ouvert. Si la température et la pression d'eau et la température et la pression d'huile du moteur M sont normales, la sortie de la porte OU 29 est aussi au niveau logique "0", la sortie de l'inverseur 32 est au niveau logique "I", et la porte ET 31 est validée par les signaux logiques "I" présents sur ses deuxième et troisième entrées.

Lorsque la tension entre deux phases quelconques du secteur 30 chute au-dessous du seuil prédéterminé de tension minimale, ceci est détecté par le comparateur 23 qui produit sur sa sortie 23b un signal logique "I", qui transite à travers la porte ET 31 et active le circuit de commande 18, lequel actionne le démarreur du moteur M. Lorsque la vitesse de rotation du moteur M et de l'alternateur G atteint le seuil de vitesse d'arrêt du démarreur, ceci est détecté par le comparateur 24 dont la sortie passe au niveau logique "0". La sortie de la porte ET 31 passe donc aussi au niveau logique "0", ce qui désactive le circuit de commande 18 et provoque l'arrêt du démarreur du moteur M. Lorsque l'alternateur G atteint son seuil de vitesse nominale, ceci est détecté par le comparateur 26 qui produit sur sa sortie un signal logique "I" qui valide la porte ET 33. Lorsque la plus petite des tensions entre phases de l'alternateur G atteint le seuil de tension mininale pré-enregistré dans le mémoire du microprocesseur ou défini par le codeur 38, ceci est détecté par le comparateur 27, qui produit alors sur sa sortie un signal logique "I" qui transiste à travers la porte ET 33 pour activer le circuit de commande 19, lequel provoque la fermeture du contacteur 13.

Tant que la plus petite des tensions entre phases du secteur 30 reste inférieure au seuil de tension minimale pré-enregistré dans la mémoire du microprocesseur ou défini par le codeur 34, le groupe électrogène reste en fonctionnement et branché au secteur. Lorsque la plus petite des tensions entre phases du secteur redevient supérieure ou égale audit seuil de tension minimale, ceci est détecté par le comparateur 23, qui produit sur sa sortie 23a un signal logique "I" qui transite à travers la porte OU 28 pour activer le circuit de commande 17, lequel provoque alors l'arrêt du groupe électrogène. Il en résulte que les sorties des comparateurs 26 et 27 passent au niveau logique "0", de même que la sortie de la porte ET 33, ce qui désactive le circuit de commande 19, lequel provoque l'ouverture du contacteur 13. Le dispositif de démarrage et de contrôle 20 reste alors dans cet état tant que la plus petite des tensions entre phases du réseau 30 reste supérieure ou égale audit seuil de tension minimale. Pendant le fonctionnement du groupe électrogène, si la vitesse de l'alternateur G devient supérieure ou égale au seuil de survitesse pré-enregistré dans la mémoire du microprocesseur ou défini par le codeur 36, ceci est détecté par le comparateur 25, qui produit sur sa sortie un signal logique "I" qui transite successivement à travers les portes OU 29 et 28, pour activer le circuit de commande 17, lequel provoque l'arrêt du groupe électrogène. De même, si la température ou la pression d'eau ou la température ou la pression d'huile du moteur M devient anormale pendant le fonctionnement du moteur, le signal de défaut correspondant $S_1$, $S_2$, $S_3$ ou $S_4$ est émis et transite successivement à travers les portes 29 et 28 pour activer le circuit de commande 17 et provoquer l'arrêt du groupe électrogène.

Un ou plusieurs afficheurs numériques peuvent être prévus pour afficher les tensions mesurées par les circuits de mesure 14 et 16, et pour afficher la fréquence et la vitesse calculées dans le dispositif numérique de mesure 10. En outre, une imprimante, commandée par le microprocesseur, peut être prévue pour imprimer tous les changements d'état du système, ainsi que la date et l'heure desdits changements d'état. La bande imprimée permet ainsi une meilleure gestion du système par la connaissance exacte de l'heure et de la nature de chacun des changements d'état.

Il va de soi que la forme d'exécution de la présente invention qui a été décrite ci-dessus a été donnée à titre d'exemple purement indicatif et nullement limitatif, et que de nombreuses modifications peuvent être facilement apportées par l'homme de l'art sans pour autant sortir du cadre de la présente invention. C'est ainsi notamment que, au lieu de connecter chacun des trois adaptateurs 4 de la figure I entre deux des trois phases de l'alternateur, il est possible de les connecter chacun entre une phase respective et un point neutre dans le cas où un tel point neutre existe. En outre, dans une version simplifiée du dispositif numérique de mesure de vitesse 10, il est possible de prévoir un seul circuit d'adaptation et de mise en forme I et un seul circuit de comptage et de mémorisation 2. En outre, au lieu d'utiliser un redresseur mono-alternance 5, il est possible d'utiliser un redresseur bi-alternance. Dans ce cas, la fréquence du signal rectangulaire délivrée par le comparateur 7 est égale au double de la fréquence F de la tension de l'alternateur et la valeur de la période T mémorisée dans la mémoire tampon 11 est égale à la moitié de la période de la tension de l'alternateur. En conséquence, le circuit de calcul numérique 3 doit dans ce cas calculer la fréquence F par la formule :

$$F = \frac{2}{T}$$

En outre, au lieu que les deux circuits de mesure de tension 14 et 16 mesurent la plus petite des tensions entre phases du secteur et de l'alternateur, respectivement, ils peuvent être conçus pour mesurer la valeur moyenne desdites tensions.

**Revendications**

Revendications modifiées conformément à la règle 86(2) EPC.

1.- Dispositif numérique de mesure de la vitesse d'un alternateur faisant partie d'un groupe électrogène, comprenant une génératrice tachymétrique, au moins un circuit d'adaptation d'impédance et de mise en forme (1), qui est connecté à la génératrice tachymétrique et qui produit un signal rectangulaire périodique ayant une fréquence correspondant à celle de la tension de la génératrice tachymétrique, au moins un circuit de comptage et de mémorisation (2), qui reçoit ledit signal rectangulaire périodique, et un circuit de calcul numérique (3), qui est connecté à la sortie du circuit de comptage et de mémorisation (2), caractérisé en ce que la génératrice tachymétrique est constituée par l'alternateur (G) lui-même, en ce que, à chaque période du signal rectangulaire périodique, le circuit de comptage et de mémorisation (2) produit et stocke une valeur numérique qui est directement proportionnelle à la période de la tension de l'alternateur (G), et en ce que le circuit de calcul numérique (3) calcule la fréquence de la tension dudit alternateur et la vitesse de celui-ci à partir de la valeur numérique mémorisée.

2.- Dispositif selon la revendication 1, caractérisé en ce que le circuit d'adaptation et de mise en forme (1) comprend un transformateur (4), dont l'enroulement primaire est connecté entre deux phases de l'alternateur, un redresseur (5) connecté au secondaire du transformateur, un amplificateur (6) connecté à la sortie du redresseur (5) et un comparateur (7) dont l'une des entrées est connectée à la sortie de l'amplificateur (6) et dont l'autre entrée reçoit une tension de référence, dont la valeur est choisie de manière à être plus faible que la valeur crête de la tension obtenue à la sortie de l'amplificateur (6) au démarrage de l'alternateur (G).

3.- Dispositif selon la revendication 1 ou 2, caractérisé en ce que le circuit de comptage et de mémorisation (2) comprend une horloge (9), un compteur (8) dont l'entrée de comptage est connectée à la sortie de l'horloge (9) et l'entrée de remise à zéro à la sortie du comparateur (7), et une mémoire tampon (11), dont l'entrée des données est connectée à la sortie du compteur (8) et l'entrée de commande d'écriture à la sortie du comparateur (7).

4.- Dispositif selon l'une quelconque des revendications I à 3, caractérisé en ce qu'il comprend trois circuits d'adaptation et de mise en forme (I), qui sont branchés chacun entre une paire respective de phases de l'alternateur et à chacun desquels est associé un circuit respectif de comptage et de mémorisation (2), et en ce que ledit circuit de calcul numérique (3) est connecté aux trois circuits de comptage et de mémorisation (2) et comprend des moyens (12) pour déterminer parmi les valeurs numériques mémorisées dans les trois circuits de comptage et de mémorisation, celle qui a la plus petite valeur, le calcul de la fréquence et de la vitesse étant effectué à partir de la plus petite des trois valeurs numériques mémorisées.

5.- Dispositif selon l'une quelconque des revendications I à 4, en combinaison avec un dispositif de démarrage et de contrôle d'un groupe électrogène de secours comprenant un moteur à combustion interne (M) équipé d'un démarreur électrique et un alternateur (G) relié mécaniquement au moteur (M) et électriquement au secteur (30) par un contacteur (13) normalement ouvert, le moteur et le contacteur étant respectivement démarré et fermé en réponse à une baisse de la tension du secteur au-dessous d'un seuil prédéterminé de tension minimale, caractérisé en ce qu'il comprend un premier circuit de mesure de tension (14), qui est connecté au secteur (30) et qui délivre sur sa sortie un signal représentant la valeur de la tension du secteur, un second circuit de mesure de tension (16), qui est connecté à l'alternateur (G) et qui délivre sur sa sortie un signal représentant la valeur de la tension produite par l'alternateur, un premier circuit de commande (17) pour commander l'arrêt du groupe électrogène, un second circuit de commande (18) pour commander le démarreur, un troisième circuit de commande (19) pour commander le contacteur (13), des moyens comparateurs (21) connectés au dispositif numérique de mesure de vitesse (10) et aux premier et second circuits de mesure de tension (14 et 16) pour comparer le signal de sortie du dispositif numérique de mesure de vitesse à plusieurs seuils prédéterminés de vitesse et les signaux de sortie des premier et second circuits de mesure de tension à des seuils prédéterminés de tension, et un circuit logique de décision (22), dont l'entrée est connectée aux moyens comparateurs (21) et la sortie aux premier, second et troisième circuits de commande (17,18 et 19) pour activer sélectivement lesdits circuits de commande en réponse aux résultats des comparaisons effectuées par les moyens comparateurs (21).

6.- Dispositif selon la revendication 5, caractérisé en ce que les moyens comparateurs (21) comprennent un premier comparateur (23), dont l'une des entrées est connectée à la sortie du premier circuit de mesure de tension (14) et dont l'autre entrée reçoit un premier signal de référence correspondant audit seuil prédéterminé de tension minimale, et qui fournit un signal logique "1" sur une première sortie (23a) lorsque le signal produit par le premier circuit de mesure de tension (14) a une valeur supérieure ou égale à celle du premier signal de référence, et un signal logique "l" sur une seconde sortie (23b) lorsque ledit signal a une valeur inférieure à celle dudit premier signal de référence, des second, troisième et quatrième comparateurs (24, 25 et 26), dont l'une des entrées est connectée à la sortie du dispositif numérique de mesure de vitesse (10) et dont l'autre entrée reçoit respectivement un second, un troisième et un quatrième signal de référence, qui correspondent respectivement à un seuil de vitesse d'arrêt du démarreur du moteur (M), à un seuil de survitesse de l'alternateur et à un seuil de vitesse nominale de l'alternateur, les second, troisième et quatrième comparateurs produisant un signal logique "l" lorsque le signal de sortie du dispositif numérique de mesure de vitesse (10) a une valeur qui est respectivement inférieure au second signal de référence, supérieure ou égale au troisième signal de référence et supérieure ou égale au quatrième signal de référence, et un cinquième comparateur (27), dont l'une des entrées est connectée à la sortie du second circuit de mesure de tension (16) et dont l'autre entrée reçoit un cinquième signal de référence correspondant à un seuil de tension minimale, et qui délivre sur sa sortie un signal logique "l" lorsque la valeur su signal produit par le second circuit de mesure de tension (16) est supérieure ou égale à celle du cinquième signal de référence.

7.- Dispositif selon la revendication 6, caractérisé en ce que le circuit logique de décision (22) comprend une première porte ET (31) ayant une première et une seconde entrées connectées respectivement à la seconde sortie (23b) du premier comparateur (23) et à la sortie du second comparateur (24), et une sortie connectée au second circuit de commande (18), une première porte OU (28) ayant deux entrées connectées respectivement à la première sortie (23a) du premier comparateur (23) et à la sortie du troisième comparateur (25), et une sortie connectée au premier circuit de commande (17), et une seconde porte ET (33) ayant deux entrées connectées respectivement aux sorties des quatrième et cinquième comparateurs (26 et 27) et une sortie connectée au troisième circuit de commande (19) pour fermer le contacteur (13) en réponse à des signaux logiques "1" présents simultanément aux sorties des quatrième et cinquième comparateurs (26 et 27).

8.- Dispositif selon la revendication 7, caractérisé en ce que le circuit logique de décision (22) comprend en outre une seconde porte OU (29) ayant une entrée connectée à la sortie du troisième comparateur (25), au moins une autre entrée recevant un signal de défaut ($S_1$, $S_2$, $S_3$, $S_4$,) et une sortie connectée directement à l'une des deux entrées de la première porte OU (28) et à travers un inverseur logique (32) à une troisième entrée de la première porte ET (31), pour activer le premier circuit de commande (17) et pour désactiver le second circuit de commande (18) en réponse à un signal logique "l" à la sortie du troisième comparateur (25) ou en présence dudit signal de défaut.

9.- Dispositif selon l'une quelconque des revendications 5 à 8, caractérisé en ce que le circuit de calcul numérique (3) du dispositif numérique de mesure de vitesse (10) et les moyens comparateurs (21) et le circuit logique de décision (22) du dispositif de démarrage et de contrôle (20) sont constitués par un microprocesseur.

FIG.1

FIG.2b

FIG.2a

EP 0 296 295 A1

FIG_3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-4 580 127  (BLOWERS)<br>* Colonne 2, lignes 9-20; colonne 4, lignes 32-66; figures 1,2 * | 1-3 | G 01 P    3/489 |
| A | | 5,9 | |
| A | GB-A-  924 387  (ROLLS-ROYCE LTD)<br>* Page 2, lignes 46-104; figures 1,2 *<br>--- | 1-4 | |
| A | US-A-4 575 671  (LEE et al.)<br>* Colonne 6, lignes 20-38; figures 1,2 *<br>--- | 4,5,9 | |
| A | GB-A-2 150 286  (CIBA-GEIGY AG)<br>* Page 3, lignes 31-50; figure 3 *<br>----- | 7,8 | |

DOMAINES TECHNIQUES
RECHERCHES (Int. Cl.4)

G 01 P
H 02 J

Le présent rapport a été établi pour toutes les revendications

| Lieu de la recherche | Date d'achèvement de la recherche | Examinateur |
|---|---|---|
| LA HAYE | 22-02-1988 | HANSEN P. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
......................................................................................................
& : membre de la même famille, document correspondant

EPO FORM 1503 03.82 (P0402)